# EUROPEAN PATENT APPLICATION

(11) **EP 4 790 549 A1**
(43) Date of publication of application: **12.08.2026**
(21) Application number: 24883845.0
(22) Date of filing: 09.05.2024
(51) Int. Cl.: G06F 8/60

(54) **INTERFACE MANAGEMENT METHOD AND RELATED DEVICE**

(30) Priority: 02.11.2023 CN 202311456090; 30.01.2024 CN 202410129034
(71) Applicant: Huawei Cloud Computing Technologies Co., Ltd., Gui'an New District, Guizhou 550025 (CN)
(72) Inventor: MAO, Zhewen, Guiyang, Guizhou 550025 (CN); XU, Dehai, Guiyang, Guizhou 550025 (CN); AN, Wen, Guiyang, Guizhou 550025 (CN)
(74) Representative: MERH-IP Matias Erny Reichl Hoffmann Patentanwälte PartG mbB
(86) International application number: PCT/CN2024/091900
(87) International publication number: WO 2025/091832

(57) **Abstract**

This application provides an interface management method, including: obtaining interface call records of a plurality of microservices in an application, where the interface call records include an interface call provided inside the application by the microservice and/or an interface call provided outside the application by the microservice; drawing an interface call relationship diagram of the application in a running state based on the interface call records of the plurality of microservices; drawing a boundary of the application in the interface call relationship diagram based on microservice registration information of the application; and when there is an interface call that breaks through the boundary of the application in the interface call records, displaying, to a user, an interface call that has a security risk, for example, the interface call that breaks through the boundary of the application. In this method, the interface call relationship diagram of the application in the running state is drawn based on the interface call records of the plurality of microservices, and the boundary of the application is drawn based on the microservice registration information of the application, to identify the interface call that breaks through the boundary of the application, implement application security risk monitoring, and provide a basis for application security governance and traffic governance.

## Description

This application claims priorities to Chinese Patent Application No. 202311456090.0, filed with the China National Intellectual Property Administration on November 2, 2023 and entitled "INTERFACE MANAGEMENT METHOD AND RELATED DEVICE", and to Chinese Patent Application No. 202410129034.4, filed with the China National Intellectual Property Administration on January 30, 2024 and entitled "INTERFACE MANAGEMENT METHOD AND RELATED DEVICE", both of which are incorporated herein by reference in their entireties.

### TECHNICAL FIELD

This application relates to the field of computer technologies, and in particular, to an interface management method, an application control system, a compute device cluster, a computer-readable storage medium, and a computer program product.

### BACKGROUND

An application programming interface (Application Programming Interface, API) is a set of special rules and requirements provided to ensure communication between programs. With the continuous development of cloud applications, an application may not only provide an open interface (open API) for other applications or users, but also provide an API internally, so that different modules of the application can call the API. For example, in a microservice architecture-based application, microservices may also call each other through APIs.

As there are more microservices in the applications, API calls become more complex. For example, API calls may include API calls between microservices within an application and API calls between applications. The API calls between the applications may be further classified into the following: an application calls an external API of another application or an external application calls an API of another application.

Application-level API call traffic poses great challenges to application security and traffic control. For example, API calls in a form of an elephant flow (Elephant Flow) may affect normal running of application services. The industry urgently needs to provide an interface management method, to ensure application security or perform effective traffic control on the applications.

### SUMMARY

This application provides an interface management method. In the method, an interface call relationship diagram of an application in a running state is drawn based on interface call records of a plurality of microservices, and a boundary of the application is drawn based on microservice registration information of the application, to identify an interface call that breaks through the boundary of the application, implement application security risk monitoring, ensure application security, perform effective traffic control on the application, and provide a basis for API security governance and traffic governance. This application further provides an application control system, a compute device cluster, a computer-readable storage medium, and a computer program product that correspond to the interface management method.

According to a first aspect, this application provides an interface management method. The method may be performed by an application control system. The application control system is used to identify risks of interface calls, to help security governance and traffic governance. The application control system may be a software system. The software system may be an independent software system, or may be integrated into another software system in a form of a plug-in, a functional module, an applet, or the like. The software system may be deployed in a compute device cluster, and the compute device cluster executes program code of the software system, to perform the interface management method in this application. In some examples, the application control system may alternatively be a hardware system, for example, a compute device cluster having an interface management function. When the compute device cluster runs, the interface management method in this application is performed.

Specifically, the application control system may obtain interface call records of a plurality of microservices in an application, where the interface call records include an interface call provided inside the application by the microservice and/or an interface call provided outside the application by the microservice. The application control system may draw an interface call relationship diagram of the application in a running state based on the interface call records of the plurality of microservices. Then, the application control system may draw a boundary of the application in the interface call relationship diagram based on microservice registration information of the application. The registration information indicates a microservice registered by the application in a registration center, and the boundary of the application encloses the microservice registered by the application in the registration center. When there is an interface call that breaks through the boundary of the application in the interface call records, the application control system displays, to a user, an interface call that has a security risk (for example, an abnormal call or an improper API call). The interface call that has the security risk includes the interface call that breaks through the boundary of the application.

In this method, the application-level interface call records are aggregated, the application-level interface call relationship is drawn based on the interface call records, and the boundary of the application is defined based on the microservice registration information of the application. In this way, application-level insecure traffic (traffic that has a security risk), for example, the interface call that breaks through the boundary of the application can be identified, and is displayed in views. On one hand, developers can be reminded to rectify improper interface call relationships. In addition, the identified interface call can be used to monitor whether there is an uncontrollable elephant flow, whether a mouse flow that can trigger a denial of service is frequently called, and whether there is an externally exposed interface without access control. In this way, effective traffic control can be performed on the application, and a basis for security governance and traffic governance of application interfaces is provided.

In some possible implementations, the application may further include an application gateway. The application gateway is a middleware used to manage and route microservice requests. The application gateway serves as an entry point in a microservice architecture, and is configured to receive a request from a client (for example, another application) and route the request to an appropriate microservice. During specific implementation, the application control system may further obtain an interface call record of the application gateway, where the interface call record of the application gateway includes an interface call of calling a microservice inside the application by the application gateway. Correspondingly, when drawing the interface call relationship diagram, the application control system may draw the interface call relationship diagram of the application in the running state based on the interface call records of the plurality of microservices and the interface call record of the application gateway. The application control system may draw, in the interface call relationship diagram, the boundary of the application in the running state based on the microservice registration information of the application and registration information of the application gateway. The boundary of the application encloses the microservice registered by the application in the registration center and the application gateway. The application control system can display, to the user, an interface call that breaks through the boundary of the application and does not pass through the application gateway.

For the application including the application gateway, the application gateway may also be considered as a microservice. The interface call relationship diagram may be drawn based on the interface call record of the application gateway. The boundary of the application may be drawn based on the microservice registration information of the application and the registration information of the application gateway. An interface call that directly breaks through the boundary of the application without passing through the application gateway, for example, a non-compliant interface call like an interface call from outside to inside or an interface call from inside to outside without passing through the application gateway, may be accurately identified based on the interface call relationship diagram and the boundary. This helps application security governance or traffic governance.

In some possible implementations, the application control system may aggregate the obtained interface call records of the plurality of microservices in the application, and then perform analysis based on the aggregated interface call records, to form relational call records. The relational call records may record the interface call relationships in a form of a relational data table. The application control system performs the foregoing processing on the interface call records, to reduce difficulty in drawing the interface call relationship diagram and improve drawing efficiency. Further, when the application includes the application gateway, the application control system may aggregate the call record of the application gateway and the interface call records of the microservice together, to draw an interface call relationship diagram including the application gateway. In this way, a more comprehensive and accurate interface call relationship diagram can be drawn.

In some possible implementations, the application control system may further obtain a static analysis result of source code of the application, where the static analysis result includes a static call relationship of the microservice of the application. The application control system may analyze the interface call relationship diagram of the application in the running state and the static call relationship, to obtain an interface call that exists in the interface call relationship diagram in the running state but does not exist in the static call relationship. Correspondingly, the interface call that has the security risk includes the interface call that exists in the interface call relationship diagram in the running state but does not exist in the static call relationship.

In the method, the static call relationship obtained by performing static analysis on the source code of the application and the interface call relationship diagram of the application in the running state are analyzed, for example, compared, to find an insecure interface call that does not exist in the static call relationship but exists in the interface call relationship diagram in the running state, thereby providing more abundant information for application security governance and traffic governance.

In some possible implementations, the application control system may further draw an interface call relationship diagram of the application in a static state based on the static call relationship of the microservice of the application. Correspondingly, the application control system may analyze the interface call relationship diagram of the application in the running state and the interface call relationship diagram of the application in the static state. The application control system may analyze, by using a graph processing algorithm, the interface call relationship diagram of the application in the running state and the interface call relationship diagram of the application in the static state, to quickly obtain an abnormal call that does not exist in the static call relationship but exists in the interface call relationship diagram in the running state. This method combines dynamic and static analysis (dynamic analysis and static analysis), to identify an interface call that has a security risk in the application, thereby ensuring the security of the application.

In some possible implementations, the application control system may draw, in the interface call relationship diagram of the application in the running state, the interface call relationship diagram of the application in the static state based on the static call relationship of the microservice of the application. Specifically, for any interface call relationship in the static call relationship, the application control system may check whether the interface call relationship diagram in the running state includes an edge corresponding to the interface call relationship. If the interface call relationship diagram in the running state includes the edge corresponding to the interface call relationship, the edge is reused. If the interface call relationship diagram in the running state does not include the edge corresponding to the interface call relationship, the edge corresponding to the interface call relationship is drawn in the interface call relationship diagram in the running state. For ease of differentiation, the application control system may use different styles to draw the edges corresponding to the static call relationship.

In this method, the interface call relationship diagram in the static state and the interface call relationship diagram in the running state are drawn in the same relationship diagram, so that the user can easily view an abnormal call or an improper interface call, thereby providing a reference for developers to rectify improper call relationships.

In some possible implementations, the application control system may further display call information of the interface call to the user, where the call information includes at least one of a call source, a call method, a call path, or a call parameter. In this method, details such as the call source, the call method, the call path, or the call parameter are displayed when the interface call is displayed, to provide more abundant information for the developers to rectify improper call relationships.

In some possible implementations, the application control system may further display, to the user by using a target style, the interface call that has the security risk. The target style is different from a display style of a compliant interface call. The style may include at least one of a color, a line type, or a thickness of an edge that represents the interface call relationship. During specific implementation, the application control system may display a compliant interface call and a non-compliant interface call by using different colors or different line types. For example, the boundary of the application may be displayed by using a red dashed line. Correspondingly, for an interface call that directly breaks through the boundary of the application without passing through the application gateway, the application control system may display the interface call to the user by using a red line (for example, red implementation), and for an interface call that passes through the application gateway or an interface call inside the application, the application control system may display the interface call to the user by using a green line.

By displaying the interface call that has the security risk in the target style, the user can quickly locate the security risk and perform rectification accordingly. This can improve the efficiency of application security governance or traffic governance and improve governance effects.

In some possible implementations, the application control system may further send alarm information to the user for the interface call that has the security risk. The alarm information may be text information, voice information, indicator blinking, or buzzer vibration. In this method, by proactively generating alarms for the interface call that has the security risk, the developers can be reminded to rectify the interface call that has the security risk in a timely manner, ensuring application security and reliability.

According to a second aspect, this application provides an application control system. The system includes:
a record obtaining module, configured to obtain interface call records of a plurality of microservices in an application, where the interface call records include an interface call provided inside the application by the microservice and/or an interface call provided outside the application by the microservice;
a call relationship drawing module, configured to draw an interface call relationship diagram of the application in a running state based on the interface call records of the plurality of microservices;
a boundary drawing module, configured to draw a boundary of the application in the interface call relationship diagram based on microservice registration information of the application, where the registration information indicates a microservice registered by the application in a registration center, and the boundary of the application encloses the microservice registered by the application in the registration center; and
a call relationship display module, configured to: when there is an interface call that breaks through the boundary of the application in the interface call records, display, to a user, an interface call that has a security risk, where the interface call that has the security risk includes the interface call that breaks through the boundary of the application.

In some possible implementations, the application further includes an application gateway, and the record obtaining module is further configured to:
obtain an interface call record of the application gateway, where the interface call record of the application gateway includes an interface call of calling a microservice inside the application by the application gateway;
the call relationship drawing module is specifically configured to:
   draw the interface call relationship diagram of the application in the running state based on the interface call records of the plurality of microservices and the interface call record of the application gateway;
   the boundary drawing module is specifically configured to:
      draw, in the interface call relationship diagram, the boundary of the application in the running state based on the microservice registration information of the application and registration information of the application gateway, where the boundary of the application encloses the microservice registered by the application in the registration center and the application gateway; and
      the call relationship display module is specifically configured to:
         display, to the user, an interface call that breaks through the boundary of the application and does not pass through the application gateway.

In some possible implementations, the system further includes:
a static analysis module, configured to obtain a static analysis result of source code of the application, where the static analysis result includes a static call relationship of the microservice of the application; and
a call relationship analysis module, configured to analyze the interface call relationship diagram of the application in the running state and the static call relationship, to obtain an interface call that exists in the interface call relationship diagram in the running state but does not exist in the static call relationship, where
the interface call that has the security risk includes the interface call that exists in the interface call relationship diagram in the running state but does not exist in the static call relationship.

In some possible implementations, the call relationship drawing module is further configured to:
draw an interface call relationship diagram of the application in a static state based on the static call relationship of the microservice of the application; and
the call relationship analysis module is specifically configured to:
   analyze the interface call relationship diagram of the application in the running state and the interface call relationship diagram of the application in the static state.

In some possible implementations, the call relationship drawing module is specifically configured to: draw, in the interface call relationship diagram of the application in the running state, the interface call relationship diagram of the application in the static state based on the static call relationship of the microservice of the application.

In some possible implementations, the call relationship display module is further configured to:
display call information of the interface call to the user, where the call information includes at least one of a call source, a call method, a call path, or a call parameter.

In some possible implementations, the call relationship display module is specifically configured to:
display, to the user by using a target style, the interface call that has the security risk, where the target style is different from a display style of a compliant interface call.

In some possible implementations, the system further includes:
an alarm module, configured to send alarm information to the user for the interface call that has the security risk.

According to a third aspect, this application provides a compute device cluster. The compute device cluster includes at least one compute device, and the at least one compute device includes at least one processor and at least one memory. The at least one processor and the at least one memory communicate with each other. The at least one processor is configured to execute instructions stored in the at least one memory, to cause the compute device or the compute device cluster to perform the interface management method according to any one of the first aspect or the implementations of the first aspect.

According to a fourth aspect, this application provides a computer-readable storage medium. The computer-readable storage medium stores instructions. The instructions instruct a compute device or a compute device cluster to perform the interface management method according to any one of the first aspect or the implementations of the first aspect.

According to a fifth aspect, this application provides a computer program product including instructions. When the computer program product runs on a compute device or a compute device cluster, the compute device or the compute device cluster is caused to perform the interface management method according to any one of the first aspect or the implementations of the first aspect.

Based on the implementations provided in the foregoing aspects, this application may further provide more implementations through further combination.

### BRIEF DESCRIPTION OF DRAWINGS

To describe the technical methods in embodiments of this application more clearly, the following briefly describes the accompanying drawings for describing embodiments.
FIG. 1 is a diagram of drawing an interface call relationship in a solution according to this application;
FIG. 2 is a diagram of an architecture of an application control system according to this application;
FIG. 3 is a diagram of displaying call information of an interface call according to this application;
FIG. 4 is a flowchart of an interface management method according to this application;
FIG. 5 is a diagram of drawing call information of an interface call of each microservice in an application according to this application;
FIG. 6 is a drawn interface call relationship diagram of an application in a running state according to this application;
FIG. 7 is a flowchart of an interface management method according to this application;
FIG. 8 is a diagram of displaying an interface call that has a security risk according to this application;
FIG. 9 is a diagram of an application scenario of an interface management method according to this application;
FIG. 10 is a diagram of displaying call information of an interface call according to this application;
FIG. 11 is a diagram of a structure of a compute device according to this application;
FIG. 12 is a diagram of a structure of a compute device cluster according to this application;
FIG. 13 is a diagram of a structure of another compute device cluster according to this application; and
FIG. 14 is a diagram of a structure of another compute device cluster according to this application.

### DESCRIPTION OF EMBODIMENTS

The terms "first" and "second" in embodiments of this application are merely intended for description, and shall not be understood as an indication or implication of relative importance or an implicit indication of a quantity of indicated technical features. Therefore, a feature limited by "first" or "second" may explicitly or implicitly include one or more features.

First, some technical terms in embodiments of this application are described.

An application programming interface (English: application programming interface, API) is a computing interface that defines interaction between a plurality of computer programs, types of calls (calls) or requests (requests) that can be made, how to make a call or send a request, a data format to be used, a convention to be complied with, and the like. The API can also provide an extension mechanism, so that users can extend functions to different degrees in various ways. An API can be fully customized, specific to a component, or designed based on industry standards to ensure interoperability.

APIs allow application developers to call a set of routine functions without considering underlying source code of the routine functions or understanding details of an internal working mechanism of the routine functions. Therefore, more and more developers choose to develop applications based on APIs. APIs are classified into internal APIs (internal APIs) and open APIs (open APIs) based on permissions granted by developers to the APIs. The internal API provides an interface call inside the application, and the open API provides an interface call outside the application.

An interface call can be completed by sending a request, for example, a hypertext transfer protocol secure (Hypertext Transfer Protocol Secure, HTTPS) GET or POST request, to a server address of the API and adding a corresponding request parameter to the request according to interface descriptions. An API server may further return a processing result based on a processing status of the request.

An application gateway like an interface gateway (API Gateway, APIG) is an API management and service governance tool that integrates functions such as configuration release, environment management, access authentication, user authentication, and access control. Using the API gateway to host APIs can efficiently, securely, and cost-effectively manage services. As a single entry point of a request, the API gateway can allocate the request to the corresponding service, collect a result, and send the result to a requester.

The API gateway can implement application-level access traffic control of open APIs. However, the API gateway mainly manages open APIs, and does not manage a call relationship between microservices inside an application. The API gateway is only responsible for interface calls that pass through the API gateway, and cannot identify and manage APIs that are not exposed through the API gateway. Therefore, when the application-level API call traffic poses great challenges to application security and traffic control, it is difficult for the API gateway to identify an interface call that has a security risk, and it is difficult to ensure application security or perform effective traffic control on the application.

In view of this, this application provides an interface management method. The method may be performed by an application control system. The application control system, also referred to as an application control center, is a tool used to identify risks of interface calls and help security governance and traffic governance. Specifically, the application control system may be a software system. The software system may be an independent software system, or may be integrated into other software in a form of a plug-in or the like. The software system may be deployed in a compute device cluster, and the compute device cluster executes program code of the software system, to perform the interface management method in this application. In some examples, the application control system may alternatively be a hardware system, for example, a compute device cluster having an interface management function. When the compute device cluster runs, the interface management method in this application is performed.

Specifically, the application control system may obtain interface call records of a plurality of microservices in an application, where the interface call records include an interface call provided inside the application by the microservice and/or an interface call provided outside the application by the microservice. The application control system may draw an interface call relationship diagram of the application in a running state based on the interface call records of the plurality of microservices. Then, the application control system may draw a boundary of the application in the interface call relationship diagram based on microservice registration information of the application. The registration information indicates a microservice registered by the application in a registration center, and the boundary of the application encloses the microservice registered by the application in the registration center. When there is an interface call that breaks through the boundary of the application in the interface call records, the application control system displays, to a user, an interface call that has a security risk. The interface call that has the security risk includes the interface call that breaks through the boundary of the application.

In this method, the interface call relationship diagram of the application in the running state is drawn based on the interface call records of the plurality of microservices, and the boundary of the application is drawn based on the microservice registration information of the application, to identify the interface call that breaks through the boundary of the application, implement application security risk monitoring, ensure application security, perform effective traffic control on the application, and provide a basis for API security governance and traffic governance.

To make the technical solutions of this application clearer and easier to understand, the following describes the application control system of this application with reference to the accompanying drawings.

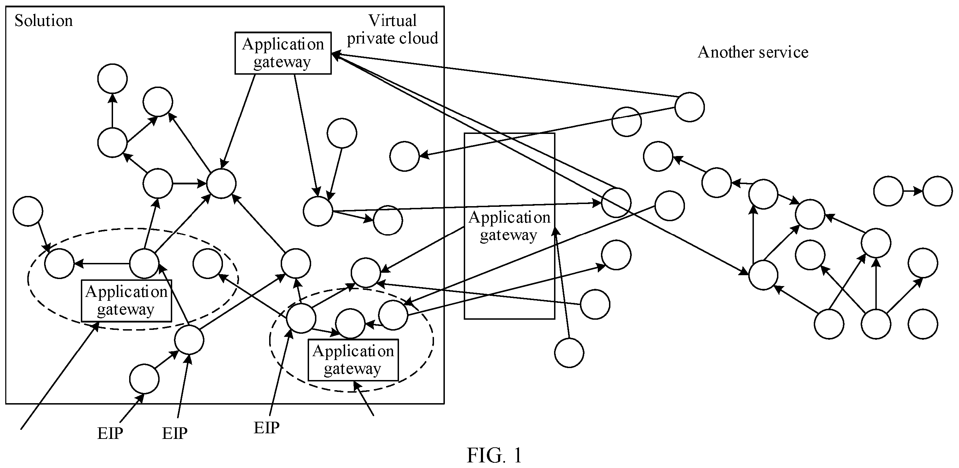

A solution usually includes a plurality of applications, and each application may be deployed in a multi-node deployment mode. Correspondingly, a large quantity of nodes, for example, thousands of nodes, may be deployed in one network space. As shown in FIG. 1, a plurality of applications of one solution may be deployed in a virtual private cloud (Virtual Private Cloud, VPC) in a multi-node deployment mode. The application control system mainly draws or describes application-level API call relationships, including an API call inside an application or an API call between applications (also referred to as an inter-application API call), and draws a boundary of the application. The application control system can identify an interface call that has a security risk based on an interface call relationship of an application in a running state and a boundary of the application, to ensure that APIs are not abused. In addition, the application control system may send alarm information for the API call that has the security risk. Further, the application control system may further provide an alarm cause (for example, a cause of a non-compliant API call), to provide a basis for API security governance and traffic governance. In addition, based on the API call relationship, access control between microservices in the application and access control between applications may be further implemented.

For ease of description, the following describes an architecture of the application control system by drawing an interface call relationship diagram and a boundary of one of the applications.

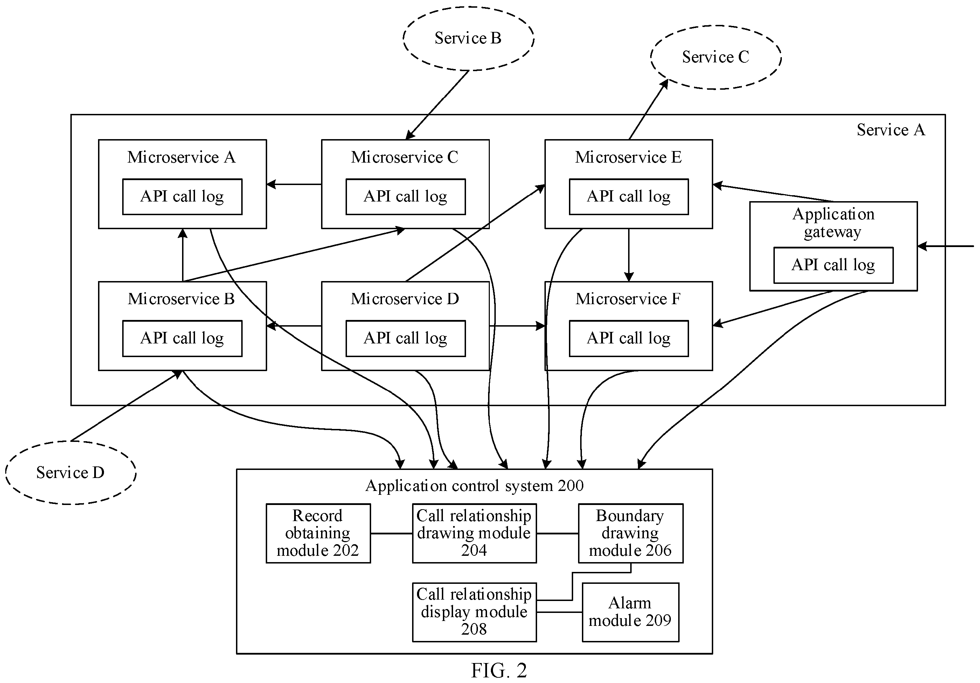

Refer to a diagram of an architecture of an application control system shown in FIG. 2. The application control system 200 is configured to draw an interface call relationship and a boundary of an application, for example, a service A (service A) in a running state, to identify an interface call that has a security risk, for example, an interface call that breaks through the boundary of the application. The application control system 200 includes a record obtaining module 202, a call relationship drawing module 204, a boundary drawing module 206, and a call relationship display module 208.

The record obtaining module 202 is configured to obtain interface call records of a plurality of microservices in the application. The interface call records include an interface call provided inside the application by the microservice and/or an interface call provided outside the application by the microservice. The microservice of the application may record a log of calling an API of the microservice, and the log is also called an API call log. The API call log includes an API call provided inside by the microservice and/or an API call provided outside by the microservice. The microservice may report the API call log to the application control system 200. Correspondingly, the record obtaining module 202 may obtain API call logs reported by the plurality of microservices in the application, to obtain the interface call records of the plurality of microservices. Further, when the application further includes an application gateway, the record obtaining module 202 may further obtain an API call log reported by the application gateway, to obtain an interface call record of the application gateway. FIG. 2 is used as an example for description. A plurality of microservices (microservices) of the service A, for example, a microservice A to a microservice F, and an application gateway of the service A respectively report API call logs to the application control system 200.

The call relationship drawing module 204 is configured to draw an interface call relationship diagram of the application in a running state based on the interface call records of the plurality of microservices. When the application includes the application gateway, the call relationship drawing module 204 may draw the interface call relationship diagram of the application in the running state based on the interface call records of the plurality of microservices and the interface call record of the application gateway. Before the interface call relationship diagram is drawn, the interface call records may be aggregated first, and then the aggregated interface call records, for example, all interface call records, are analyzed to obtain relational call records. Correspondingly, the call relationship drawing module 204 may draw the interface call relationship diagram of the application in the running state based on the relational call records.

The boundary drawing module 206 is configured to draw the boundary of the application in the interface call relationship diagram based on microservice registration information of the application. The registration information indicates a microservice registered by the application in a registration center, and the boundary of the application encloses the microservice registered by the application in the registration center. When the application includes the application gateway, the boundary drawing module 206 further draws the boundary of the application based on registration information of the application gateway. In this case, the boundary of the application further includes the application gateway. The service A is still used as an example for description. A boundary of the service A may enclose the microservice A to the microservice A and the application gateway of the service A.

The call relationship display module 208 is configured to: when there is an interface call that breaks through the boundary of the application in the interface call records, display, to a user, an interface call that has a security risk. The interface call that has the security risk includes the interface call that breaks through the boundary of the application. When the application includes the application gateway, the interface call that has the security risk may be a call that breaks through the boundary of the application without passing through the application gateway. FIG. 2 is used as an example for description. A service B (service B) directly calls the microservice C of the service A without passing through the application gateway of the service A, a service C (service C) directly calls the microservice E of the service A without passing through the application gateway of the service A, and a service D (service D) directly calls the microservice B of the service A without passing through the application gateway of the service A. The call relationship display module 208 may display, to the user, the interface calls that directly break through the boundary of service A without passing through the application gateway of the service A.

The call relationship display module 208 may display, to the user by using a target style, the interface call that has the security risk. The target style may be different from a display style of a compliant interface call. In some examples, the compliant interface call, for example, an interface call inside the application, may be displayed by using a green line, and the interface call that has the security risk may be displayed by using a red line.

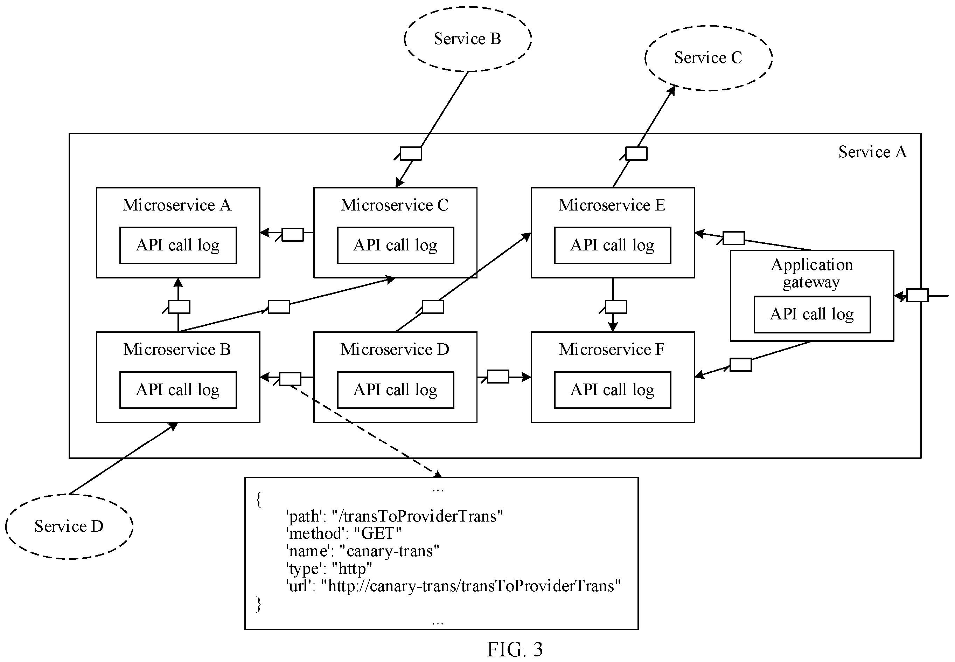

Further, the call relationship display module 208 may further display call information of the interface call. The call information may include at least one of a call source, a call method, a call path, or a call parameter. The call source is a service or microservice that calls an interface provided by a microservice. The call method may include but is not limited to POST or GET. The call path (path) may be represented by a uniform resource locator (Uniform Resource Locator, URL). The call parameter may be an interface parameter. As shown in FIG. 3, the call relationship display module 208 may display a call relationship between the plurality of microservices in the application, the boundary of the application, an external call that does not pass through the gateway, an external call that passes through the gateway, and call information of each interface call. For the call information displayed by the call relationship display module 208, refer to a code configuration in FIG. 3, including a call path (denoted as path), a call method (denoted as method), an interface name (denoted as name), a request type (denoted as type), and a URL.

In some possible implementations, the application control system 200 may further include an alarm module 209. The alarm module 209 is configured to send alarm information to the user for the interface call that has the security risk. In this way, the user can manage the API in a timely manner based on the alarm information, to provide a basis for API security governance and traffic governance.

Based on the application control system 200, this application provides an interface management method. The following describes the interface management method in this application with reference to the accompanying drawings.

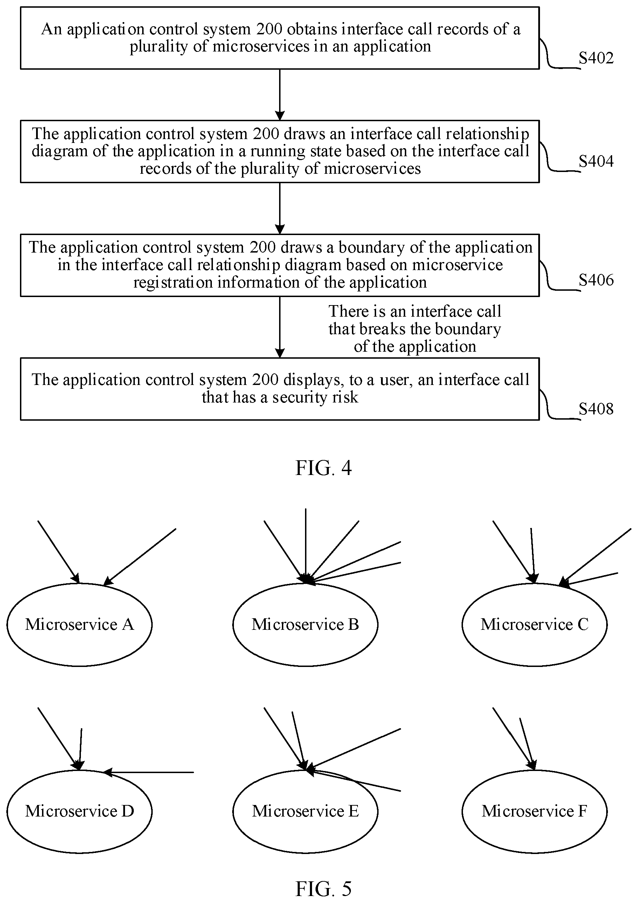

Refer to a flowchart of an interface management method shown in FIG. 4. The method includes the following steps.

S402: The application control system 200 obtains interface call records of a plurality of microservices in an application.

The interface call records include an interface call provided inside the application by the microservice and/or an interface call provided outside the application by the microservice. Specifically, the microservice in the application may record a call log of calling an API provided by the microservice. The call log may be used as an interface call record of the microservice. The plurality of microservices in the application may report, to the application control system 200, respective call logs recorded by the plurality of microservices. In this way, the application control system 200 may obtain the interface call records of the plurality of microservices in the application.

In some possible implementations, the application may further include an application gateway. The application gateway may also be called by another application, for example, another service or a microservice in another service, to call a microservice in the application. Similar to the microservice in the application, the application gateway may record an API call log provided by the application gateway, and the call log may be used as an interface call record of the application gateway. The application gateway may report the interface call record of the application gateway to the application control system 200. Correspondingly, the application control system 200 may not only obtain the interface call records of the plurality of microservices in the application, but also include the interface call record of the application gateway.

S404: The application control system 200 draws an interface call relationship diagram of the application in a running state based on the interface call records of the plurality of microservices.

Specifically, the application control system 200 aggregates the interface call records of the plurality of microservices. When the application includes the application gateway, the application control system 200 may aggregate the interface call records of the plurality of microservices and the interface call record of the application gateway. The application control system 200 may analyze the aggregated interface call records, to obtain relational call records. The relational call records may be interface call records organized in relational data. The relational data may be data represented by using a relational model. Then, the application control system 200 may draw the interface call relationship diagram of the application in the running state based on the relational call records.

When drawing the interface call relationship diagram, as shown in FIG. 5, the application control system 200 may draw call information of an interface call of each microservice in the application based on the relational call records. An example of drawing call information of an interface call of each microservice of the service A in FIG. 2 is used for description. The application control system 200 may separately draw call information of interface calls of the microservice A to the microservice F.

The call information of the interface call of each microservice is as follows:

```
         Service: service name
         Request: {
         Type: http|grpc|tcp
         url:
         path:
         method:
         port:
         }
```

path may indicate a call path, method may indicate a call method, service name may be a service name of a call source, and indicates the call source, port may indicate a port number, and port may be a parameter in call parameters.

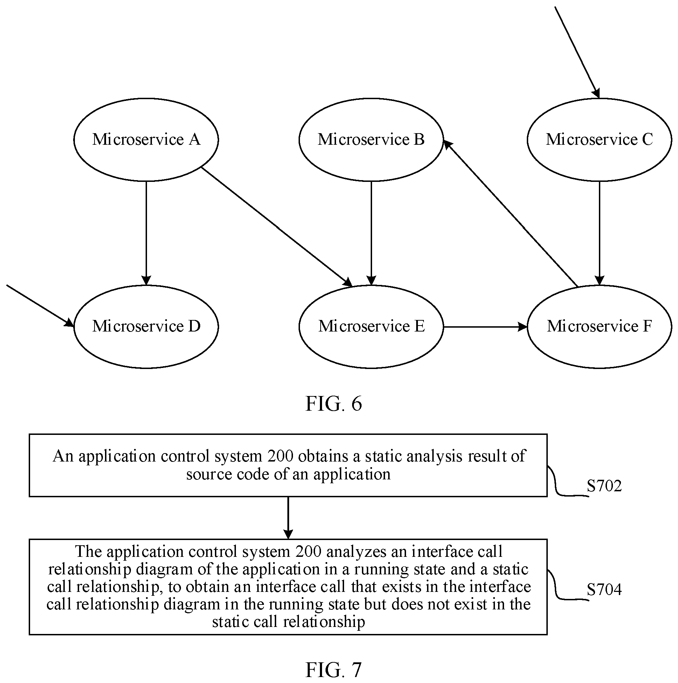

The application control system 200 may draw the interface call relationship diagram of the application in the running state based on the call information of the interface call of each microservice. During specific implementation, the application control system 200 may draw the interface call relationship diagram of the application in the running state based on the call information of the interface call drawn for each microservice, as shown in FIG. 6.

S406: The application control system 200 draws a boundary of the application in the interface call relationship diagram based on microservice registration information of the application.

The registration information indicates a microservice registered by the application in a registration center. During specific implementation, the registration information may include an identifier of the microservice registered by the application in the registration center, for example, a microservice name. The boundary of the application encloses the microservice registered by the application in the registration center. Further, when the application includes the application gateway, the application control system 200 may further obtain registration information of the application gateway in the registration center. The registration information may include an identifier of the application gateway, for example, a name or an internet protocol (Internet Protocol, IP) address of the application gateway. The application control system 200 may draw the boundary of the application in the interface call relationship diagram based on the microservice registration information and the registration information of the application gateway. The boundary encloses the microservices registered by the application and the application gateway.

S408: When there is an interface call that breaks through the boundary of the application in the interface call records, the application control system 200 displays, to a user, an interface call that has a security risk.

Specifically, the application control system 200 may identify, based on the interface call relationship diagram and the boundary of the application, whether there is an interface call that breaks through the boundary of the application in the interface call records. For example, the application control system 200 may obtain a call source in the call information of the microservice. When the call source is a service or a microservice outside the boundary of an application, specifically, a service or a microservice other than the microservice registered by the application, it indicates that the interface call breaks through the boundary of the application, there is an interface call that breaks through the boundary of the application in the interface call records, and the application has a security risk. Correspondingly, the application control system 200 may display, to the user, the interface call that has the security risk. The interface call that has the security risk includes the interface call that breaks through the boundary of the application.

In some possible implementations, the application control system 200 may display, to the user by using a target style, the interface call that has the security risk. The target style is different from a display style of a compliant interface call. The compliant interface call may include an interface call inside the application, or an interface call of the microservice inside the application through the application gateway. The interface call that has the security risk includes an interface call of the microservice outside the application, for example, an interface call of the microservice inside the application without passing through the application gateway. During specific implementation, the target style and the display style of the compliant interface call may be different colors, different line types, or lines of different thicknesses. For example, the target style may be a red connection line, and the display style of the compliant interface call may be a green connection line.

The application control system 200 may further display call information of an interface call to the user. The call information includes at least one of a call source, a call method, a call path, or a call parameter. The application control system 200 may display call information of the interface call that has the security risk, or the application control system 200 may display call information of all interface calls of the application. For example, the application control system 200 may display the call information of all interface calls in the interface call relationship diagram.

Based on the foregoing content description, this application provides an interface management method. In this method, the interface call relationship diagram of the application in the running state is drawn based on the interface call records of the plurality of microservices, and the boundary of the application is drawn based on the microservice registration information of the application, to identify the interface call that breaks through the boundary of the application, implement application security risk monitoring, ensure application security, perform effective traffic control on the application, and provide a basis for API security governance and traffic governance.

In the embodiment in FIG. 4, the interface call that has the security risk is mainly identified from the perspective of compliance. In some possible implementations, the application control system 200 may further identify, with reference to a static analysis technology, the interface call that has the security risk, for example, an interface call that exists in the running state but is not defined in source code.

Refer to a flowchart of an interface management method shown in FIG. 7. The method includes the following steps.

S702: The application control system 200 obtains a static analysis result of source code of an application.

Static analysis, also referred to as program static analysis (Program Static Analysis), is a code analysis technology in which program code (for example, source code) is scanned by using technologies such as lexical analysis, syntax analysis, control flow analysis, and data flow analysis without running code, to verify whether the code meets indicators such as standardization, security, reliability, and maintainability.

During specific implementation, the application control system 200 may obtain the source code of the application, and then perform static analysis on the source code, to obtain the static analysis result. The static analysis result may include a static call relationship of a microservice of the application. The static call relationship may be a microservice call relationship obtained by performing static analysis on the source code, and is specifically a microservice call relationship defined in the source code of the application. Further, when the application includes an application gateway, the static call relationship may further include a call relationship of calling a microservice by the application gateway.

S704: The application control system 200 analyzes an interface call relationship diagram of the application in a running state and the static call relationship, to obtain an interface call that exists in the interface call relationship diagram in the running state but does not exist in the static call relationship.

Specifically, the application control system 200 may draw an interface call relationship diagram of the application in a static state based on the static call relationship of the microservice of the application. The application control system 200 may draw the interface call relationship diagram of the application in the static state in a manner similar to that of drawing the interface call relationship diagram in the running state. For example, the application control system 200 may draw an interface call relationship of each microservice based on call information of the static call relationship, and then draw the interface call relationship diagram of the application in the static state based on the interface call relationship of each microservice. Correspondingly, the application control system 200 may analyze the interface call relationship diagram of the application in the running state and the interface call relationship diagram of the application in the static state, to obtain an interface call that exists in the interface call relationship diagram in the running state but does not exist in the static call relationship.

In some possible implementations, the application control system 200 may draw, in the interface call relationship diagram of the application in the running state, the interface call relationship diagram of the application in the static state based on the static call relationship of the microservice of the application. This facilitates the application control system 200 to compare the interface call relationship diagram of the application in the running state with the interface call relationship diagram of the application in the static state, to obtain an interface call that exists in the interface call relationship diagram in the running state but does not exist in the interface call relationship diagram in the static state.

Correspondingly, the interface call that has the security risk may include the interface call that exists in the interface call relationship diagram in the running state but does not exist in the static call relationship.

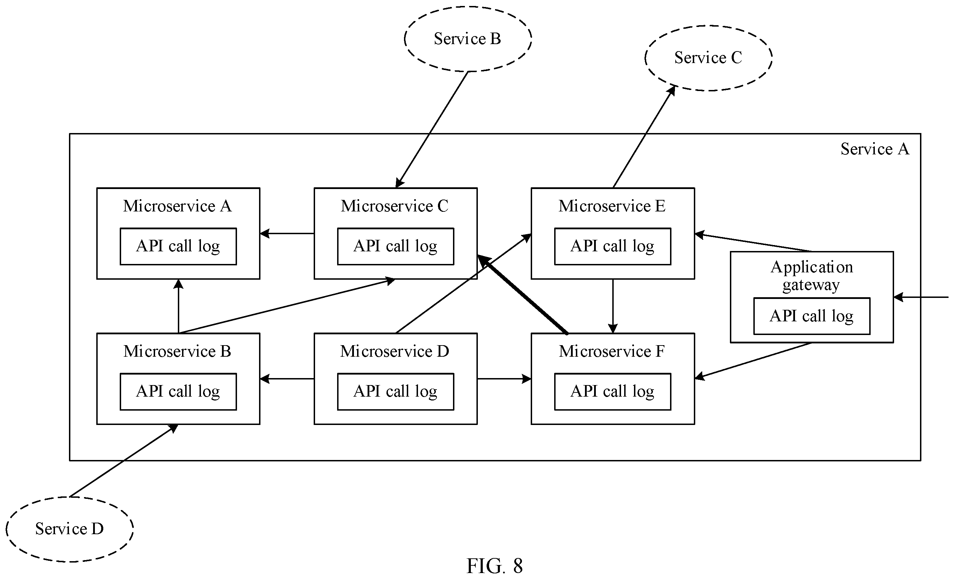

It should be noted that the embodiment shown in FIG. 7 may be combined with the embodiment in FIG. 4. For example, the application control system 200 may further perform S702 and S704 based on the embodiment shown in FIG. 4. Correspondingly, when performing S608 to display the interface call that has the security risk, the application control system 200 may not only display the interface call that breaks through the boundary of the application, but also display the interface call that exists in the interface call relationship diagram in the running state but does not exist in the static call relationship. As shown in FIG. 8, a service A is still used as an example for description. An interface call relationship diagram of the service A in a running state includes that a microservice F calls a microservice C, and the interface call does not exist in a static call relationship of the service A. The application control system 200 may display the interface call by using a target style, for example, a red connection line or a bold connection line.

In some possible implementations, the application control system 200 may further send alarm information to the user for the interface call that has the security risk. The application control system 200 may send the alarm information to the user in different manners. For example, the alarm information may be different types of signals. In some examples, the application control system 200 may send, to the user in a form of a pop-up window, the alarm information for the interface call that has the security risk. In some other examples, the application control system 200 may alternatively send the alarm information to the user through vibration or blinking of a prompt indicator.

The following describes the interface management method in this application with reference to a specific application scenario.

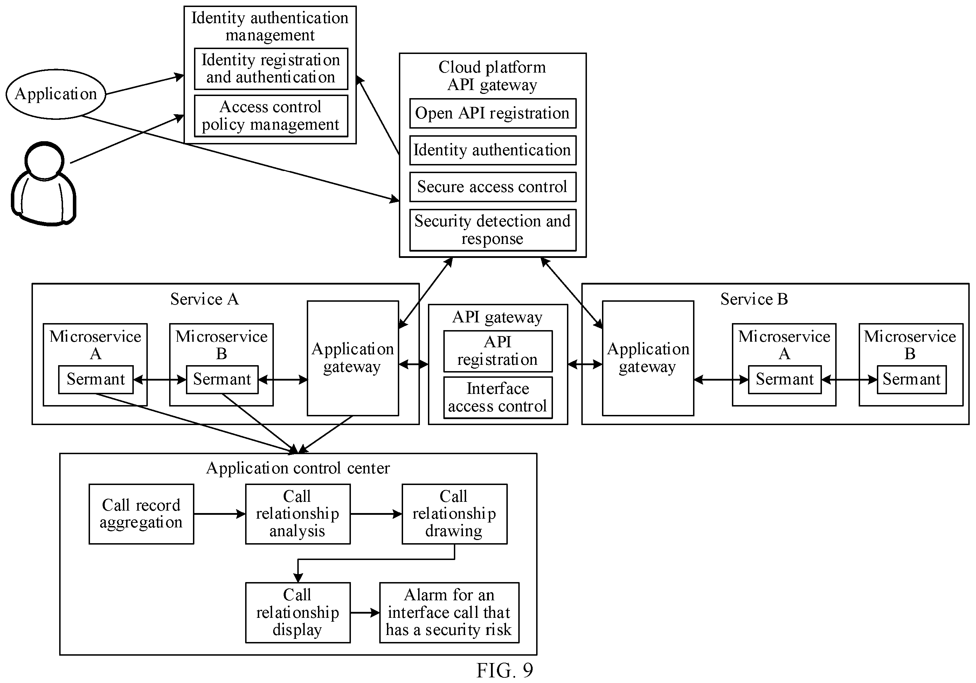

Refer to a diagram of an application scenario of an interface management method shown in FIG. 9. The method may be applied to a microservice hosting platform. The microservice hosting platform includes an application control center, and the application control center is configured to serve as an important capability carrier of application-level API governance, to implement a function of the application control platform 200. For example, the application control center is used to draw all API call relationships of an application, a boundary of the application, and improper call relationships and give an alarm and display. The method specifically includes the following steps.

Step 1: Each microservice hosted by the microservice hosting platform records a call log of calling an API of the microservice.

The call log may include a call (internal API) provided inside by the microservice and a call (open API) provided outside by the microservice. As shown in FIG. 9, a microservice of the application may include Sermant. Sermant (also referred to as Java-mesh) is a non-proxy service grid based on a Java bytecode enhancement technology, and provides a service governance function for a host application program by using the Java bytecode enhancement technology, to resolve a service governance problem in a large-scale microservice architecture. In this embodiment, Sermant may record a call log of calling the API of the microservice, and Sermant may report the call log of the API of the microservice to the application control center. The call log may be an interface call record of the microservice.

In some possible implementations, the application further includes an application gateway. The application gateway may also record a call log of calling the application gateway, and report the call log of calling the application gateway to the application control center. In this way, the application control center may obtain the interface call record of the microservice and the interface call record of the application gateway.

Step 2: The application control center aggregates the interface call record of each microservice and the interface call record of the application gateway.

Specifically, the application control center may aggregate the interface call record of each microservice and the interface call record of the application gateway through clustering, to obtain all interface call records of the application in a running state.

Step 3: The application control center analyzes all the interface call records, to form relational call records.

Specifically, the application control center may perform relationship analysis based on the interface call records, to form the relational call records.

Step 4: The application control center obtains microservice registration information of the application and registration information of the application gateway based on a registration center.

The microservice registration information may include an identifier of the microservice registered by the application in the registration center, for example, a microservice name. The registration information of the application gateway may include an identifier of the application gateway registered by the application in the registration center, for example, a name or an IP address of the application gateway.

It should be noted that step 4, step 1, step 2, and step 3 may be performed concurrently, or may be performed in a specified sequence. This is not limited in this embodiment of this application.

Step 5: The application control center draws an interface call relationship diagram of the application in the running state based on the relational call records.

The interface call relationship diagram includes call information of all interface calls of the application. The application control center may draw call information of an interface call of each microservice in the application based on the relational call records, and then draw the interface call relationship diagram of the application in the running state based on the call information of the interface call of each microservice.

Step 6: The application control center draws the boundary of the application in the interface call relationship diagram based on the microservice registration information of the application, and displays an interface call that has a security risk.

The microservice registration information includes the identifier of the registered microservice. The application control center may draw, in the interface call relationship diagram based on the identifier of the microservice registered by the application, the boundary used to enclose the microservice registered by the application in the registration center. The application control center can display, by using a target style like a red connection line, the interface call that has the security risk, for example, an interface call that breaks through the boundary of the application.

Further, the application control center may further verify the security of the boundary of the application. For example, if there is an interface call that breaks through the boundary of the application in the interface call records of the application in the running state, it indicates that the boundary of the application has a security risk.

Step 7: The application control center generates an alarm for the interface call that has the security risk.

The application control center can identify application-level insecure traffic, for example, the interface call that has the security risk, and display the traffic in views, to remind developers to rectify improper (for example, non-compliant) interface calls, helping security governance and traffic governance. For example, the application control center may identify an interface call that breaks through the boundary of the application without passing through the application gateway. The interface call that breaks through the boundary and that is identified by the application control center may be used to monitor whether there is an uncontrollable elephant flow, whether a mouse flow that can trigger a denial of service is frequently called, and whether there is an externally exposed interface without access control. This can help application security governance and traffic governance.

In some possible implementations, the application control center may further perform static analysis on source code of the application, to obtain a static interface call relationship. The application control center can draw an interface call relationship diagram in a static state based on the static interface call relationship. Correspondingly, the application control center may compare the interface call relationship diagram in the running state (an actual call relationship) with the interface call relationship diagram in the static state (a call relationship defined in the source code), to find an interface call that has a security risk, for example, an insecure interface call.

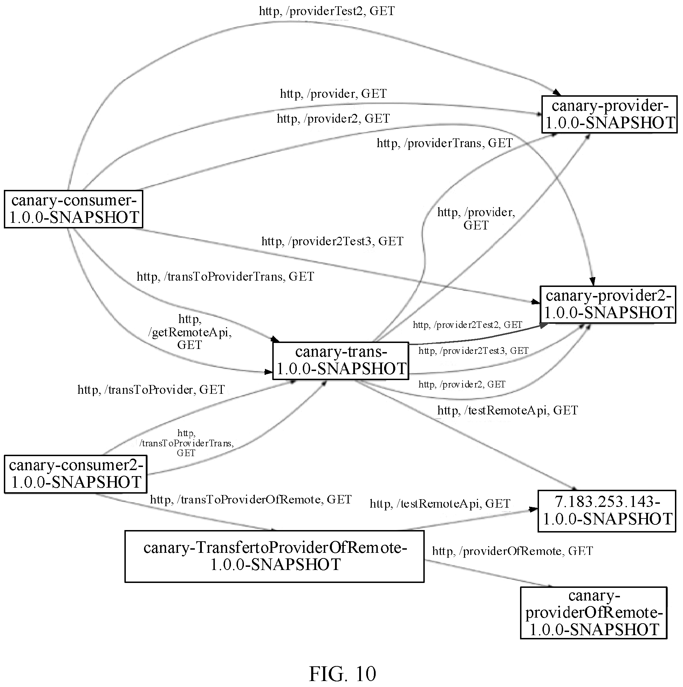

As shown in FIG. 10, when drawing an interface call relationship diagram, for example, the interface call relationship diagram in the running state or the interface call relationship diagram in the static state, the application control center may not only draw an interface call between microservices, but also draw call information of the interface call. The call information may be as follows:

```
         'service': service name
         'version': service version
         'request': [{'type': 'http'|'grpc'|'tcp'
                                'url': url|host name
                                'path': only for 'http' and 'grpc'
                        'method': only for 'http'
                        'port': only for 'tcp'}]
```

In the method, all ingress and egress API call relationships of the application are drawn, the specific call information is displayed, the boundary of the application is drawn, the interface call that has the security risk is displayed in the interface call relationship diagram, and the alarm is generated for the interface call that has the security risk, to help security governance and traffic governance.

Based on the foregoing interface management method, this application further provides an application control system. As shown in FIG. 2, the application control system 200 includes:
a record obtaining module 202, configured to obtain interface call records of a plurality of microservices in an application, where the interface call records include an interface call provided inside the application by the microservice and/or an interface call provided outside the application by the microservice;
a call relationship drawing module 204, configured to draw an interface call relationship diagram of the application in a running state based on the interface call records of the plurality of microservices;
a boundary drawing module 206, configured to draw a boundary of the application in the interface call relationship diagram based on microservice registration information of the application, where the registration information indicates a microservice registered by the application in a registration center, and the boundary of the application encloses the microservice registered by the application in the registration center; and
a call relationship display module 208, configured to: when there is an interface call that breaks through the boundary of the application in the interface call records, display, to a user, an interface call that has a security risk, where the interface call that has the security risk includes the interface call that breaks through the boundary of the application.

For example, the record obtaining module 202, the call relationship drawing module 204, the boundary drawing module 206, and the call relationship display module 208 may be implemented by using hardware or software.

When implemented by using software, the record obtaining module 202, the call relationship drawing module 204, the boundary drawing module 206, and the call relationship display module 208 may be application programs running on a compute device. The call relationship drawing module 204 is used as an example for description. The application program may be a computing engine. The application program may alternatively be provided to the user in a form of a virtualization service. The virtualization service may include a virtual machine (virtual machine, VM) service, a bare metal server (bare metal server, BMS) service, and a container (container) service. The VM service may be a service of virtualizing a virtual machine (virtual machine, VM) resource pool on a plurality of physical hosts by using a virtualization technology, to provide a VM on demand for the user to use. The BMS service is a service of virtualizing a BMS resource pool on a plurality of physical hosts to provide a BMS on demand for the user to use. The container service is a service of virtualizing a container resource pool on a plurality of physical hosts to provide a container on demand for the user to use. The VM is a simulated virtual computer, namely, a logical computer. The BMS is an elastically scalable high-performance computing service whose computing performance is the same as that of a conventional physical machine, and has a feature of secure physical isolation. The container is a kernel virtualization technology capable of providing lightweight virtualization to isolate user spaces, procedures, and resources. It should be understood that the VM service, the BMS service, and the container service in the virtualization service are merely used as specific examples. During actual application, the virtualization service may alternatively be another lightweight or heavyweight virtualization service. This is not specifically limited herein.

When implemented by using hardware, the record obtaining module 202, the call relationship drawing module 204, the boundary drawing module 206, and the call relationship display module 208 may include at least one compute device, for example, a server. Alternatively, the record obtaining module 202, the call relationship drawing module 204, the boundary drawing module 206, and the call relationship display module 208 may be devices implemented by using an application-specific integrated circuit (application-specific integrated circuit, ASIC) or a programmable logic device (programmable logic device, PLD), or the like. The PLD may be implemented by a complex programmable logic device (complex programmable logic device, CPLD), a field-programmable gate array (field-programmable gate array, FPGA), a generic array logic (generic array logic, GAL), or any combination thereof.

In some possible implementations, the application further includes an application gateway, and the record obtaining module 202 is further configured to:
obtain an interface call record of the application gateway, where the interface call record of the application gateway includes an interface call of calling a microservice inside the application by the application gateway;
the call relationship drawing module 204 is specifically configured to:
   draw the interface call relationship diagram of the application in the running state based on the interface call records of the plurality of microservices and the interface call record of the application gateway;
   the boundary drawing module 206 is specifically configured to:
      draw, in the interface call relationship diagram, the boundary of the application in the running state based on the microservice registration information of the application and registration information of the application gateway, where the boundary of the application encloses the microservice registered by the application in the registration center and the application gateway; and
      the call relationship display module 208 is specifically configured to:
         display, to the user, an interface call that breaks through the boundary of the application and does not pass through the application gateway.

In some possible implementations, the application control system 200 further includes:
a static analysis module, configured to obtain a static analysis result of source code of the application, where the static analysis result includes a static call relationship of the microservice of the application; and
a call relationship analysis module, configured to analyze the interface call relationship diagram of the application in the running state and the static call relationship, to obtain an interface call that exists in the interface call relationship diagram in the running state but does not exist in the static call relationship, where
the interface call that has the security risk includes the interface call that exists in the interface call relationship diagram in the running state but does not exist in the static call relationship.

The static analysis module and the call relationship analysis module are not shown in FIG. 2. Similar to the record obtaining module 202, the call relationship drawing module 204, the boundary drawing module 206, and the call relationship display module 208, the static analysis module and the call relationship analysis module may be implemented by using software or hardware.

In some possible implementations, the call relationship drawing module 204 is further configured to:
draw an interface call relationship diagram of the application in a static state based on the static call relationship of the microservice of the application; and
the call relationship analysis module is specifically configured to:
analyze the interface call relationship diagram of the application in the running state and the interface call relationship diagram of the application in the static state.

In some possible implementations, the call relationship drawing module 204 is specifically configured to:
draw, in the interface call relationship diagram of the application in the running state, the interface call relationship diagram of the application in the static state based on the static call relationship of the microservice of the application.

In some possible implementations, the call relationship display module 208 is further configured to:
display call information of the interface call to the user, where the call information includes at least one of a call source, a call method, a call path, or a call parameter.

In some possible implementations, the call relationship display module 208 is specifically configured to:
display, to the user by using a target style, the interface call that has the security risk, where the target style is different from a display style of a compliant interface call.

In some possible implementations, the application control system 200 further includes:
an alarm module 209, configured to send alarm information to the user for the interface call that has the security risk.

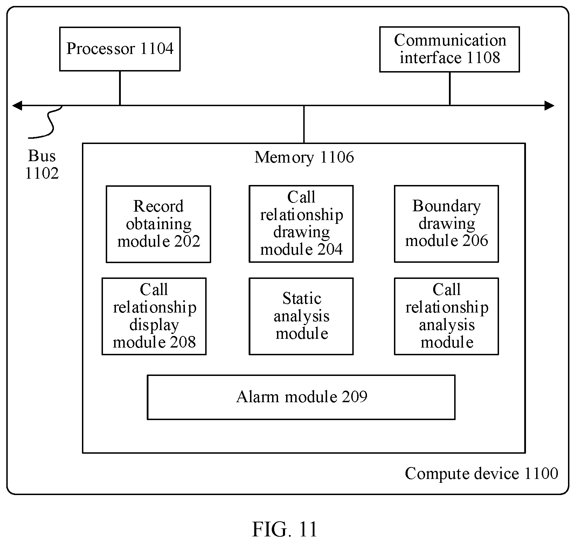

This application further provides a compute device 1100. As shown in FIG. 11, the compute device 1100 includes a bus 1102, a processor 1104, a memory 1106, and a communication interface 1108. The processor 1104, the memory 1106, and the communication interface 1108 communicate with each other through the bus 1102. The compute device 1100 may be a server or a terminal device. It should be understood that quantities of processors and memories in the compute device 1100 are not limited in this application.

The bus 1102 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, the bus is represented by using only one line in FIG. 11, but it does not mean that there is only one bus or only one type of bus. The bus 1102 may include a path for transferring information between components (for example, the memory 1106, the processor 1104, and the communication interface 1108) of the compute device 1100.

The processor 1104 may include any one or more of processors such as a central processing unit (central processing unit, CPU), a graphics processing unit (graphics processing unit, GPU), a microprocessor (microprocessor, MP), or a digital signal processor (digital signal processor, DSP).

The memory 1106 may include a volatile memory (volatile memory), for example, a random access memory (random access memory, RAM). The memory 1106 may further include a non-volatile memory (non-volatile memory), for example, a read-only memory (read-only memory, ROM), a flash memory, a hard disk drive (hard disk drive, HDD), or a solid-state drive (solid-state drive, SSD). The memory 1106 stores executable program code, and the processor 1104 executes the executable program code to implement the foregoing interface management method. Specifically, the memory 1106 stores instructions used by the application control system 200 to perform the interface management method.

The communication interface 1108 uses a transceiver module, for example, but not limited to, a network interface card or a transceiver, to implement communication between the compute device 1100 and another device or a communication network.

An embodiment of this application further provides a compute device cluster. The compute device cluster includes at least one compute device. The compute device may be a server, for example, a central server, an edge server, or a local server in a local data center. In some embodiments, the compute device may alternatively be a terminal device, for example, a desktop computer, a notebook computer, or a smartphone.

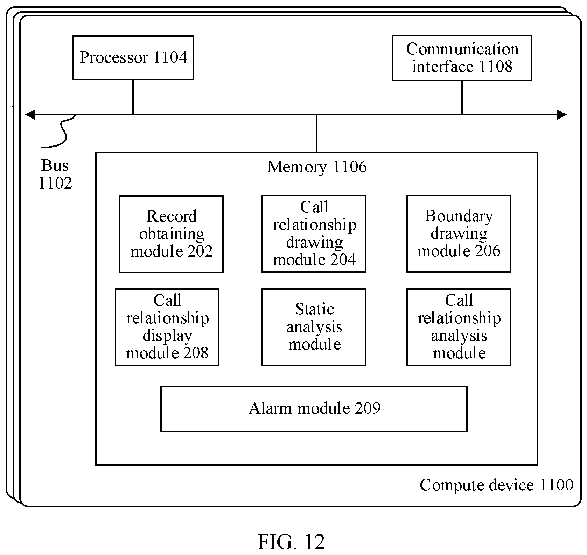

As shown in FIG. 12, the compute device cluster includes at least one compute device 1100. A memory 1106 in the one or more compute devices 1100 in the compute device cluster may store same instructions used by the application control system 200 to perform the interface management method.

In some possible implementations, the one or more compute devices 1100 in the compute device cluster may alternatively be configured to execute some instructions used by the application control system 200 to perform the interface management method. In other words, a combination of the one or more compute devices 1100 may jointly execute the instructions used by the application control system 200 to perform the interface management method.

It should be noted that the memories 1106 in different compute devices 1100 in the compute device cluster may store different instructions, to perform some functions of the application control system 200.

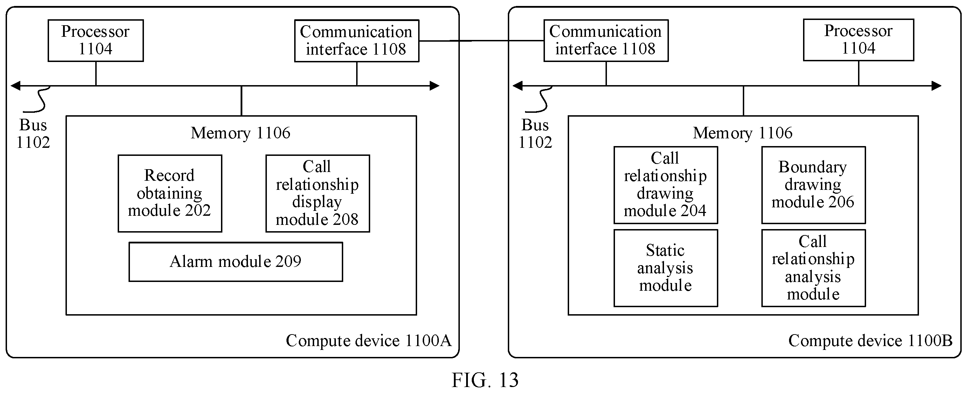

FIG. 13 shows a possible implementation. As shown in FIG. 13, two compute devices 1100A and 1100B are connected through a communication interface 1108. A memory in the compute device 1100A stores instructions used to perform functions of a record obtaining module 202 and a call relationship display module 208. A memory in the compute device 1100B stores instructions used to perform functions of a call relationship drawing module 204 and a boundary drawing module 206. In other words, the memories 1106 of the compute devices 1100A and 1100B jointly store instructions used by the application control system 200 to perform the interface management method. Further, the memory in the compute device 1100A stores an instruction for performing a function of an alarm module 209, and the memory in the compute device 1100B stores an instruction for performing a function of a static analysis module and a call relationship analysis module.

In a connection manner of the compute device cluster shown in FIG. 13, because a large amount of computational power is needed to draw a call relationship and a boundary in the interface management method provided in this application, it is considered that functions implemented by the call relationship drawing module 204 and the boundary drawing module 206 are performed by the compute device 1100B.

It should be understood that functions of the compute device 1100A shown in FIG. 13 may alternatively be completed by a plurality of compute devices 1100. Similarly, functions of the compute device 1100B may alternatively be completed by a plurality of compute devices 1100.

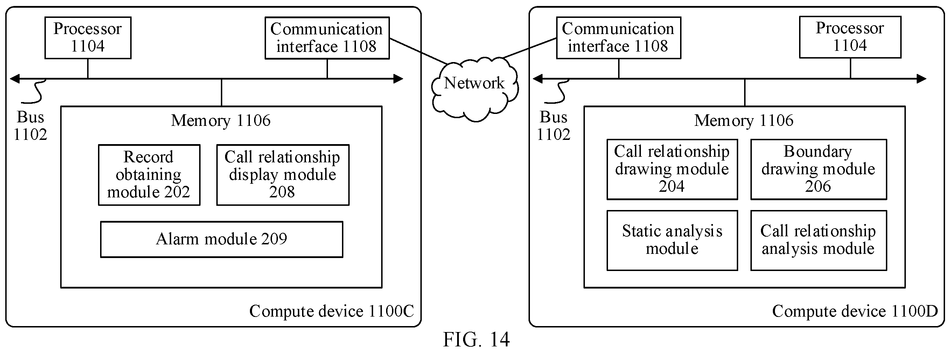

In some possible implementations, the one or more compute devices in the compute device cluster may be connected through a network. The network may be a wide area network, a local area network, or the like. FIG. 14 shows a possible implementation. As shown in FIG. 14, two compute devices 1100C and 1100D are connected through a network. Specifically, each compute device is connected to the network through a communication interface in the compute device. In this possible implementation, a memory 1106 in the compute device 1100C stores instructions for performing functions of a record obtaining module 202 and a call relationship display module 208. In addition, a memory 1106 in the compute device 1100D stores instructions for performing functions of a call relationship drawing module 204 and a boundary drawing module 206.

In a connection manner of the compute device cluster shown in FIG. 14, because a large amount of computational power is needed to draw a call relationship and a boundary in the interface management method provided in this application, it is considered that functions implemented by the call relationship drawing module 204 and the boundary drawing module 206 are performed by the compute device 1100D.

It should be understood that functions of the compute device 1100C shown in FIG. 14 may alternatively be completed by a plurality of compute devices 1100. Similarly, functions of the compute device 1100D may alternatively be completed by a plurality of compute devices 1100.

An embodiment of this application further provides a computer-readable storage medium. The computer-readable storage medium may be any usable medium that can be stored by a compute device, or a data storage device like a data center, including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions, and the instructions instruct the compute device to perform the interface management method applied to the application control system 200.

An embodiment of this application further provides a computer program product including instructions. The computer program product may be software or a program product that includes instructions and that can run on a compute device or can be stored in any usable medium. When the computer program product runs on at least one computer device, the at least one compute device is caused to perform the interface management method.

Finally, it should be noted that the foregoing embodiments are merely intended for describing the technical solutions of the present invention, but not for limiting the present invention. Although the present invention is described in detail with reference to the foregoing embodiments, a person of ordinary skill in the art should understand that modifications may still be made to the technical solutions described in the foregoing embodiments or equivalent replacements may be made to some technical features thereof. Such modifications or equivalent replacements do not cause corresponding technical solutions to depart from the protection scope of the technical solutions in embodiments of the present invention.

## Claims

1. An interface management method, wherein the method comprises:
obtaining interface call records of a plurality of microservices in an application, wherein the interface call records comprise an interface call provided inside the application by the microservice and/or an interface call provided outside the application by the microservice;
drawing an interface call relationship diagram of the application in a running state based on the interface call records of the plurality of microservices;
drawing a boundary of the application in the interface call relationship diagram based on microservice registration information of the application, wherein the registration information indicates a microservice registered by the application in a registration center, and the boundary of the application encloses the microservice registered by the application in the registration center; and
when there is an interface call that breaks through the boundary of the application in the interface call records, displaying, to a user, an interface call that has a security risk, wherein the interface call that has the security risk comprises the interface call that breaks through the boundary of the application.

2. The method according to claim 1, wherein the application further comprises an application gateway, and the method further comprises:
obtaining an interface call record of the application gateway, wherein the interface call record of the application gateway comprises an interface call of calling a microservice inside the application by the application gateway;
the drawing the interface call relationship diagram of the application in the running state based on the interface call records of the plurality of microservices comprises:
drawing the interface call relationship diagram of the application in the running state based on the interface call records of the plurality of microservices and the interface call record of the application gateway;
the drawing the boundary of the application in the interface call relationship diagram based on the microservice registration information of the application comprises:
drawing, in the interface call relationship diagram, the boundary of the application in the running state based on the microservice registration information of the application and registration information of the application gateway, wherein the boundary of the application encloses the microservice registered by the application in the registration center and the application gateway; and
the displaying, to the user, the interface call that has the security risk comprises:
displaying, to the user, an interface call that breaks through the boundary of the application and does not pass through the application gateway.

3. The method according to claim 1 or 2, wherein the method further comprises:
obtaining a static analysis result of source code of the application, wherein the static analysis result comprises a static call relationship of the microservice of the application; and
analyzing the interface call relationship diagram of the application in the running state and the static call relationship, to obtain an interface call that exists in the interface call relationship diagram in the running state but does not exist in the static call relationship, wherein
the interface call that has the security risk comprises the interface call that exists in the interface call relationship diagram in the running state but does not exist in the static call relationship.

4. The method according to claim 3, wherein the method further comprises:
drawing an interface call relationship diagram of the application in a static state based on the static call relationship of the microservice of the application; and
the analyzing the interface call relationship diagram of the application in the running state and the static call relationship comprises:
analyzing the interface call relationship diagram of the application in the running state and the interface call relationship diagram of the application in the static state.

5. The method according to claim 4, wherein the drawing the interface call relationship diagram of the application in the static state based on the static call relationship of the microservice of the application comprises:
drawing, in the interface call relationship diagram of the application in the running state, the interface call relationship diagram of the application in the static state based on the static call relationship of the microservice of the application.

6. The method according to any one of claims 1 to 5, wherein the method further comprises:
displaying call information of the interface call to the user, wherein the call information comprises at least one of a call source, a call method, a call path, or a call parameter.

7. The method according to any one of claims 1 to 6, wherein the displaying, to the user, the interface call that has the security risk comprises:
displaying, to the user by using a target style, the interface call that has the security risk, wherein the target style is different from a display style of a compliant interface call.

8. The method according to any one of claims 1 to 7, wherein the method further comprises:
sending alarm information to the user for the interface call that has the security risk.

9. An application control system, comprising:
a record obtaining module, configured to obtain interface call records of a plurality of microservices in an application, wherein the interface call records comprise an interface call provided inside the application by the microservice and/or an interface call provided outside the application by the microservice;
a call relationship drawing module, configured to draw an interface call relationship diagram of the application in a running state based on the interface call records of the plurality of microservices;
a boundary drawing module, configured to draw a boundary of the application in the interface call relationship diagram based on microservice registration information of the application, wherein the registration information indicates a microservice registered by the application in a registration center, and the boundary of the application encloses the microservice registered by the application in the registration center; and
a call relationship display module, configured to: when there is an interface call that breaks through the boundary of the application in the interface call records, display, to a user, an interface call that has a security risk, wherein the interface call that has the security risk comprises the interface call that breaks through the boundary of the application.

10. The system according to claim 9, wherein the application further comprises an application gateway, and the record obtaining module is further configured to:
obtain an interface call record of the application gateway, wherein the interface call record of the application gateway comprises an interface call of calling a microservice inside the application by the application gateway;
the call relationship drawing module is specifically configured to:
draw the interface call relationship diagram of the application in the running state based on the interface call records of the plurality of microservices and the interface call record of the application gateway;
the boundary drawing module is specifically configured to:
draw, in the interface call relationship diagram, the boundary of the application in the running state based on the microservice registration information of the application and registration information of the application gateway, wherein the boundary of the application encloses the microservice registered by the application in the registration center and the application gateway; and
the call relationship display module is specifically configured to:
display, to the user, an interface call that breaks through the boundary of the application and does not pass through the application gateway.

11. The system according to claim 9 or 10, wherein the system further comprises:
a static analysis module, configured to obtain a static analysis result of source code of the application, wherein the static analysis result comprises a static call relationship of the microservice of the application; and
a call relationship analysis module, configured to analyze the interface call relationship diagram of the application in the running state and the static call relationship, to obtain an interface call that exists in the interface call relationship diagram in the running state but does not exist in the static call relationship, wherein
the interface call that has the security risk comprises the interface call that exists in the interface call relationship diagram in the running state but does not exist in the static call relationship.

12. The system according to claim 11, wherein the call relationship drawing module is further configured to:
draw an interface call relationship diagram of the application in a static state based on the static call relationship of the microservice of the application; and
the call relationship analysis module is specifically configured to:
analyze the interface call relationship diagram of the application in the running state and the interface call relationship diagram of the application in the static state.

13. The system according to claim 12, wherein the call relationship drawing module is specifically configured to:
draw, in the interface call relationship diagram of the application in the running state, the interface call relationship diagram of the application in the static state based on the static call relationship of the microservice of the application.

14. The system according to any one of claims 9 to 13, wherein the call relationship display module is further configured to:
display call information of the interface call to the user, wherein the call information comprises at least one of a call source, a call method, a call path, or a call parameter.

15. The system according to any one of claims 9 to 14, wherein the call relationship display module is specifically configured to:
display, to the user by using a target style, the interface call that has the security risk, wherein the target style is different from a display style of a compliant interface call.

16. The system according to any one of claims 9 to 15, wherein the system further comprises:
an alarm module, configured to send alarm information to the user for the interface call that has the security risk.

17. A compute device cluster, wherein the compute device cluster comprises at least one compute device, the at least one compute device comprises at least one processor and at least one memory, the at least one memory stores computer-readable instructions, and the at least one processor executes the computer-readable instructions, to cause the compute device cluster to perform the interface management method according to any one of claims 1 to 8.

18. A computer-readable storage medium, comprising computer-readable instructions, wherein the computer-readable instructions are used to implement the interface management method according to any one of claims 1 to 8.

19. A computer program product, comprising computer-readable instructions, wherein the computer-readable instructions are used to implement the interface management method according to any one of claims 1 to 8.
